# EUROPEAN PATENT SPECIFICATION

(11) **EP 2 119 744 B1**
(45) Date of publication and mention of the grant of the patent: **05.06.2019**
(21) Application number: 07708320.2
(22) Date of filing: 09.02.2007
(51) Int. Cl.: C08L 33/08, C08K 5/11, C08L 35/00

(54) **TWO-COMPONENT CURING COMPOSITION**
ZWEIKOMPONENTIGE HÄRTENDE ZUSAMMENSETZUNG
COMPOSITION DE DURCISSEMENT À DEUX COMPOSANTS

(43) Date of publication of application: 18.11.2009
(73) Proprietor: Sunstar Giken Kabushiki Kaisha, Takatsuki-shi, Osaka 569-1134 (JP)
(72) Inventor: OONO, Hitoshi, Takatsuki-shi Osaka 569-1134 (JP); WAKAMORI, Tatsuya, Takatsuki-shi Osaka 569-1134 (JP); GOTOU, Kiyoyuki, Takatsuki-shi Osaka 569-1134 (JP); TAKAMI, Kazunobu, Takatsuki-shi Osaka 569-1134 (JP)
(74) Representative: Adam, Holger
(86) International application number: PCT/JP2007/052384
(87) International publication number: WO 2008/096444

(56) References cited:
- EP-A1- 1 655 346
- WO-A2-01/90054
- JP-A- 02 034 684
- JP-A- 2006 124 563
- US-A- 2 872 429

## Description

### Technical Field

The present invention relates to two-component curing compositions. In more particular, the present invention relates to a two-component curing composition for an automotive material used in an automobile manufacturing line, wherein said two-component curing composition is composed of a liquid A comprising a thermoplastic resin and a plasticizer, wherein the thermoplastic resin is selected from the group consisting of acrylic resins; MBS resins; polyvinyl chloride; vinyl chloride copolymers; ionomer resins; AAS resins; AES resins; AS resins; ABS resins; thermoplastic polyurethane resins, and polyester resins; and a liquid B comprising a gelling agent containing a dibasic acid ester, wherein the liquid A and the liquid B form a gel when they are mixed at room temperature and wherein the dibasic acid ester is a malonic acid diester, a succinic acid diester or a glutaric acid diester, which is free from skin irritation and has high safety. The two-component curing composition of the present invention forms a gel as a whole at room temperatures by mixing the two liquids and then coating the mixture, in other words, initial gelation occurs, whereby deformation or dropout caused by handling or showering in subsequent steps can be prevented, and a completely cured product can be formed by a subsequent heat treatment, the product having adhesive property to, for example, a steel sheet with an oily surface. The composition is particularly applicable to sealers (for the purpose of waterproofing, airproofing, dustproofing, and rustproofing of welded parts), undercoating materials (for the purpose of chipping resistance), or adhesives in an automobile body assembly step of an automobile manufacturing line. Preferably, the inventive two-component curing composition is suitable for automotive materials used in automobile manufacturing lines.

Further, the two-component curing compositions of the present invention can be used as, for example, automobile parts such as filter elements of an oil filter, sealers for housing, and undercoating materials for fuel tanks, and are applicable to parts, final products and the like in other various industrial products, as well as molded articles.

### Background Art

According to a sealing process of automobile body parts in an automobile manufacturing line (which basically includes an automobile body assembly step, a coating step and an installation step), press-molded automobile body parts are assembled by spot-welding in the first automobile body assembly step, and the connection parts of the automobile body parts are coated with a sealer, for waterproofing, airproofing, dustproofing, and rustproofing the connection parts, because gaps are formed due to distortion of automobile body panels between the welded spots.

In such a sealing process, sealers of one-component thermosetting compositions are mainly used. In the subsequent step of the automobile body assembly, the coating step, the automobile body members are usually washed with water, subjected to pre-treatments, electrodeposition coating, and then baked in an electric furnace. Then, the automobile body members having the connection parts are coated with the sealer, and are sent to a sealer furnace, and after that, the members are sequentially subjected to undercoating, middle coating and top coating steps, then finally are subjected to the installation step.

The conventionally used one-component heat-curable sealers, however, require using sealer furnaces for curing them.

On the other hand, in steps for producing oil filters, a method is proposed in which the sealer is partly cured by ultraviolet rays or heat source (kiss-gelled), in order to prevent damages of uncured sealer when the members are sent to the curing furnace, and after that it is completely cured by heating (see, for example, Patent Document 1). According to this method, however, ultraviolet ray irradiation devices or heating devices are additionally required for an energy source to partly cure the sealer, and therefore it is disadvantageous in terms of equipment cost and energy cost.

Patent Document 1: Japanese Translation No. 8-500531 of the PCT International Publication

EP 1 655 346 A1 relates to a two-pack curable composition. More particularly, EP 1 655 346 A1 relates to a two-pack curable composition, in particular, a two-pack curable composition used in an automobile manufacturing line, which comprises a plastisol compounding a thermoplastic resin and a plasticizer, and a gelling agent.

US 2,872,429 A relates to thermoplastic gels and provides an improved method for preparing elastomeric plastigels at room temperature and atmospheric pressure.

JP-2-34684 A relates to a water-based elastic sealant for building, composed of a first component comprising as a main agent a composition of an acrylic copolymer emulsion and a filler, and a second component comprising as a main agent a composition of a cement and a plasticizer.

WO 01/90054 A2 provides compounds which can generate amine by irradiation with light and are excellent both in photodecomposability and in reactivity and compatibility with amine-curable compounds, and photo-setting compositions containing the compounds.

JP 2006 124563 A provides a two-liquid sealer composition excellent in prevention ability for initial discoloration and discoloration with time.

### Disclosure of the Invention

### Problems to be Solved by the Invention

In view of the conventional difficulties in the sealing process, a main object of the present invention is to provide two-component curing compositions capable of performing the sealing process not in the coating step where the sealing process interferes the coated appearance, but in the previous step thereof, the automobile body assembly step, eliminating the necessity of sealer furnaces, applicable to sealers capable of spray-coating, and having high safety and no skin irritation.

### Means for Solving the Problem

The present inventors have devoted themselves to attaining the object, and have found that a two-component curing composition for an automotive material used in an automobile manufacturing line, wherein said two-component curing composition is composed of a liquid A comprising a thermoplastic resin and a plasticizer, wherein the thermoplastic resin is selected from the group consisting of acrylic resins; MBS resins; polyvinyl chloride; vinyl chloride copolymers; ionomer resins; AAS resins; AES resins; AS resins; ABS resins; hermoplastic polyurethane resins, and polyester resins; and a liquid B comprising a gelling agent containing a dibasic acid ester, wherein the liquid A and the liquid B form a gel when they are mixed at room temperature and wherein the dibasic acid ester is a malonic acid diester, a succinic acid diester or a glutaric acid diester can attain the above-mentioned object, thus resulting in accomplishment of the present invention.

Throughout the present specification, "gelation" refers to a phenomenon in which a plastisol loses flowability and solidifies; and a "gelling agent" refers to a component which can make a plastisol in which a thermoplastic resin is dispersed in a plasticizer gel at room temperature. Specifically, a plasticizer, a high boiling point solvent, an organic solvent, and monomers forming a thermoplastic resin, which are capable of dissolving or swelling the thermoplastic resin that is a dispersed material of the plastisol liquid A, are used alone or in combination. The colloidally dispersed thermoplastic resin is sequentially changed to the solution state, the thickened state, and the gel state by using the gelling agent.

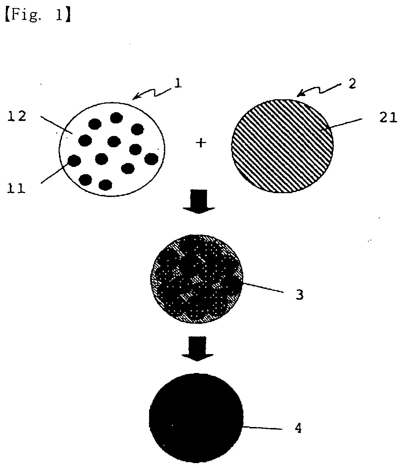

That is, as shown in Fig. 1, for example, when a liquid A 1 containing a thermoplastic resin 11 and a plasticizer 12 as main components and a liquid B 2 containing a gelling agent 21 as a component are mixed, the mixture shows a viscosity capable of spray-coating immediately after mixing, and the thermoplastic resin 11 in the plastisol liquid A 1 is dissolved and swelled over time with the gelling agent 21 in the liquid B 2, and the mixture is changed into a gel state as a whole at room temperature to form a swelled gel 3. This initial gelation prevents deformation or dropout caused by handling. After that, the system is uniformly and completely cured by additionally carrying out a heat treatment to give a completely cured product 4.

Accordingly, when the two-component curing composition coating the liquid A and the liquid B as described above is applied, for example, as a sealer, in the sealing process as described above, the sealer is coated on press-molded automobile body parts assembled by spot-welding in the automobile body assembly step, and the coated members can be subjected to a subsequent coating step starting with washing with water, because the curing compositions have showering resistance, which is required upon washing with water, due to the initial gelation. Additionally, sealer furnaces, which are conventionally used, can be omitted, because the sealer can be completely cured in an electrodeposition furnace in the coating step.

Further, aside from the sealing process, an undercoating process is also adopted in the automobile manufacturing line, in order to provide chipping resistance, which is a property to prevent breakages caused by stepping stones and their collided matters, which occurs mainly when running. Conventionally, this undercoating process is also performed in the same stage as in the conventional sealing process, that is, it is performed after electrodeposition coating and baking in an electordeposition furnace, and therefore it has been desired to perform it in the automobile body assembly step, from the same viewpoint of the conventional sealing process. According to the present inventors' studies, it has been found that the two-component curing compositions of the present invention are also sufficiently applicable to undercoating materials.

In addition, aside from the sealing process, a bonding process between outer panels and reinforcement parts is also adopted in the automobile manufacturing line, in order to mainly reduce flapping of the outer panels and impart stiffness. The adhesives conventionally used for this object are designed to have a high viscosity for imparting showering resistance, which is required in middle steps preceding the electrodeposition and coating steps following the bonding step. The high viscosity causes defects such as an increased burden on equipment for coating operation, and remarkably lowering of a quality of an electrodeposition coating if the adhesive is dropped out in a showering step. In order to solve these problems, it has been found that the two-component curing compositions of the present invention are also sufficiently applicable to the adhesives used in the bonding process.

Hereinafter, the main aspects and preferred aspects of the present invention will be described.
[1] A two-component curing composition for an automotive material used in an automobile manufacturing line, wherein said two-component curing composition is composed of: a liquid A comprising a thermoplastic resin and a plasticizer, wherein the thermoplastic resin is selected from the group consisting of acrylic resins; MBS resins; polyvinyl chloride; vinyl chloride copolymers; ionomer resins; AAS resins; AES resins; AS resins; ABS resins; thermoplastic polyurethane resins, and polyester resins; and a liquid B comprising a gelling agent containing a dibasic acid ester, wherein the liquid A and the liquid B form a gel when they are mixed at room temperature and wherein the dibasic acid ester is a malonic acid diester, a succinic acid diester or a glutaric acid diester.
[2] The two-component curing composition of [1], wherein the dibasic acid ester is succinic acid diester or glutaric acid diester.
[3] The two-component curing composition of [1] or [2], wherein the liquid B further includes a component dissolving or swelling the thermoplastic resin in the liquid A.
[4] The two-component curing composition of any one of [1] to [3], which further includes a thermosetting resin and a latent curing agent thereof.
[5] The two-component curing composition of [4], wherein the thermosetting resin is an epoxy resin and/or a urethane resin.
[6] The two-component curing composition of any one of [1] to [5], wherein the gelling agent is contained in an amount of 50 to 150 parts by weight based on 100 parts by weight of the thermoplastic resin.
[7] The two-component curing composition of any one of [1] to [6], wherein the dibasic acid ester is contained in an amount of 10 to 150 parts by weight based on 100 parts by weight of the thermoplastic resin.
[8] The two-component curing composition of any one of [1] to [7], wherein galation time is from 30 seconds to 60 minutes after mixing the liquid A and the liquid B at room temperature.
[9] The two-component curing composition of any one of [1] to [8], wherein a mixture of the liquid A and the liquid B has a viscosity capable of spray-coating upon mixing, and the mixture gels from 30 seconds to 60 minutes after coating.
[10] The two-component curing composition of any one of [1] to [9], wherein the mixture of the liquid A and the liquid B has a viscosity (20°C) of 50 to 200 Pa·s upon mixing.

### Brief Description of the Drawing

[Fig. 1] A schematic view illustrating a process from gelation of the two-component curing composition of the present invention to complete cure thereof.

### Explanation of Numerals

1: Liquid A, 2: Liquid B, 3: swelled gel, 4: completely cured product, 11: thermoplastic resin, 12: plasticizer, 21: gelling agent

### Best Mode for Carrying Out the Invention

The thermoplastic resins which can be used in the present invention are not particularly limited, and conventionally known thermoplastic resins may be used. Examples thereof include acrylic resins; MBS resins (methyl methacrylate/butadiene/styrene); polyvinyl chloride; vinyl chloride copolymers (for example, vinyl chloride/vinyl acetate copolymer, vinyl chloride/vinyl acetate/maleic acid copolymer and vinyl chloride/vinyl acetate/vinyl alcohol copolymer); ionomer resins; AAS resins (acrylonitrile/styrene/special rubber); AES resins (acrylonitrile/EPDM/styrene); AS resins (acrylonitrile/styrene); ABS resins (acrylonitrile/butadiene/styrene); thermoplastic polyurethane resins, polyester resins, and the like; and they may be used alone or in combination. Among these, the acrylic resins are preferable.

Examples of the acrylic resins used in the present invention include homopolymers or copolymers of an alkyl acrylate (the alkyl includes, for example, methyl, ethyl, butyl and 2-ethylhexyl) or an alkyl methacrylate (the alkyl includes, for example, methyl, ethyl, butyl, lauryl and stearyl), or copolymers of the esters thereof with another acrylic monomer (methacrylic acid, acrylic acid, itaconic acid, and the like); and furthermore, core-shell type acrylic resins produced by polymerizing, as monomer components for example, at least one monomer of ethyl methacrylate, n-butyl methacrylate, i-butyl methacrylate, sec-butyl methacrylate, t-butyl methacrylate, ethylhexyl methacrylate, ethyl acrylate, n-butyl acrylate, sec-butyl acrylate and t-butyl acrylate (referred to as "monomer A") with a mixture of at least one of methyl methacrylate and benzyl methacrylate and at least one of methacrylic acid, acrylic acid, itaconic acid and crotonic acid (referred to as "mixing monomer B"), and polymers of core-shell type acrylic resins or gradient type acrylic resins, which are produced by polymerizing the monomer A with the mixing monomer B while the blending proportion (ratio) of these components is changed in multistage or continuously during the polymerization. Among these, core-shell type acrylic resins or gradient type acrylic resins having a weight average molecular weight of 1000 to 2, 000,000, and a particle size of primary particles and/or secondary particles, which are agglomerates of the primary particles, of 0.1 to 100 µm are particularly preferable.

In the present invention, examples of the plasticizer which can be used in the liquid A as the plastisol include plasticizers of phthalic acid esters such as di(2-ethylhexyl)phthalate, butyl benzylphthalate, dinonyl phthalate, diisononyl phthalate, diisodecyl phthalate, diundecyl phthalate, diheptyl phthalate, and butylphthalyl butyl glycol; and polyester plasticizers such as adipic acid, sebacic acid, and trimellitic acid plasticizers including dioctyl adipate, didecyl adipate, and dioctyl sebacate plasticizer, and the like.

In the present invention, it is important to use a gelling agent containing a dibasic acid ester in the liquid B. In the present invention, it has been found that when the gelling agent containing a dibasic acid ester in the liquid B is used, two-component curing compositions which show excellent gelation property at room temperature, and are free from skin irritation and high in safety can be obtained. The dibasic acid ester may be used alone or in combination.

The dibasic acid ester is a malonic acid diester, a succinic acid diester or a glutaric acid diester.

Among these, malonic acid diesters or succinic acid diesters are preferably used. A dimethyl ester and a diethyl ester are preferable for the diesters. As the dibasic acid ester, accordingly, it is particularly preferable to use diethyl malonate or diethyl succinate.

In the present invention, examples of the gelling agent which can be used in the liquid B other than the dibasic acid ester include a component capable of dissolving or swelling the thermoplastic resin in the liquid A, such as plasticizers, high boiling point solvents, solvents, and monomers. However, the (meth)acrylic acid esters used in the polymerization such as monomers of 2-hydroxyethyl (meth)acrylate, 2-hydroxypropyl(meth)acrylate, butyl (meth)acrylate, (meth)acrylic acid, methyl (meth)acrylate, and glycidyl(meth)acrylate substantially cannot be used, because of the skin irritation caused upon preparation or use of the liquid B, even if the plastisol liquid A using the acrylic resin as the thermoplastic resin is used.

As plasticizers which can be used as a gelling agent of a thermoplastic resin, in particular an acrylic resin, plasticizers which are well compatible with the resin, and dissolve or swell the resin are preferable.

Examples of the plasticizer include the plasticizers which can be used in the above-mentioned liquid A. In addition, in combination thereof or alternatively, phthalic acid esters, adipic acid diesters such as dioctyl adipate, sebacic acid diesters such as dioctyl sebacate, phosphoric acid esters such as tributyl phosphate and tris(2-ethylhexyl)phosphate, epoxy plasticizers such as epoxidized soybean oils; benzoic acid esters such as polyoxyethyleneglycol dibenzoate, polyoxypropylene glycol dibenzoate, diethylene glycol dibenzoate, 2,2-dimethyl-1,3-propanediol dibenzoate and pentaerythritol tetrabenzoate, fumaric acid esters such as diethyl fumarate, dibutyl fumarate, dihexyl fumarate, dioctyl fumarate, bis(2-ethylhexyl)fumarate, dinonyl fumarate, diisononyl fumarate, didecyl fumarate, dibenzyl fumarate, dioleyl fumarate, octyl-2-ethylhexyl fumarate, 2-ethylhexylisononyl fumarate, butylbenzyl fumarate, monoethyl fumarate, monooctyl fumarate, mono-2-ethylhexyl fumarate and monodecyl fumarate, sulfonic acid esters such as phenol alkyl sulfonates and cresol alkyl sulfonates, and the like.

Organic solvents having a boiling point of 140°C or more under normal pressure are included in the high boiling point solvents. Although general aromatic or aliphatic solvents can also be used, process oils, petroleum fraction oils, ethylene glycol ethyl ether acetate (cellosolve acetate), propylene glycol methyl ether acetate (PGMAC), ethylene glycol methyl ether acetate (methoxycellosolve acetate), propylene glycol ethyl ether propionate, ethylene glycol ethyl ether propionate, and at least one mixture thereof is preferably used in practical applications. As all of these solvents have a boiling point of 140°C or more and polarity, they have high solubility, but they may also be used together with a non-polar solvent such as naphthene or paraffin. When the solubility or swelling property to the thermoplastic resin is higher, the gelation time tends to be shortened. The solubility or swelling property of the high boiling point solvent to the thermoplastic resin can be determined, in view of the relationship with the plasticizer in the liquid A.

As the organic solvent capable of dissolving or swelling the thermoplastic resin, one or more organic solvents selected from the group consisting of toluene, xylene, acetone, methyl ethyl ketone, methyl isobutyl ketone, ethyl acetate, butyl acetate, N-methyl-2-pyrolidone and the like may be used. It is desirable to use such an organic solvent with the plasticizer.

The gelling agents used in the present invention are not limited to those listed above, and a gelling agent to be used in the liquid B is suitably selected in view of the relationships with various liquids A as plastisol containing the thermoplastic resin and the plasticizer.

In the present invention, when an acrylic resin is used as the thermoplastic resin, it is preferable to use the dibasic acid ester alone or as a mixture thereof with a benzoic acid ester as the gelling agent. Among these, malonic acid diester or succinic acid diester, especially mixtures of diethyl malonate or diethyl succinate with dietylene glycol dibenzoate are preferable.

The two-component curing compositions of the present invention are composed of the liquid A as the plastisol containing the thermoplastic resin and the plasticizer as the main components, and the liquid B containing the gelling agent as the main component.

The gelling agent is used in an amount in a range of usually 50 to 150 parts (parts by weight, hereinafter the same), preferably 75 to 125 parts, based on 100 parts of the thermoplastic resin. When the amount of the gelling agent is too small, the gelation time after mixing is prolonged, which results in negative effects for transporting to the next step. When the amount of the gelling agent is too large, the gelation time after mixing is accelerated, the coating workability tends to be affected.

The plasticizer is used in an amount in a range of usually 75 to 200 parts, preferably 80 to 150 parts, based on 100 parts of the thermoplastic resin.

The dibasic acid ester is used in an amount in a range of usually 10 to 150 parts by weight, preferably 30 to 150 parts by weight, based on 100 parts by weight of the thermoplastic resin.

When, for example, the two-component curing composition of the present invention is applied to sealers (body sealers, seam sealers), undercoating materials, adhesives or the like practically used, addition components may be blended into the composition of the present invention. The addition components can usually be blended into the liquid A and/or the liquid B to be contained into the two-component curing composition.

Examples of the addition component include fillers such as kaolin, clay, calcium carbonate (heavy calcium carbonate, precipitated calcium carbonate, surface-treated calcium carbonate, and the like), magnesium carbonate, titanium oxide, calcined plaster, barium sulfate, zinc white, silicic acid, mica powder, talk, bentonite, silica, glass powder, red oxide, carbon black, graphite powder, alumina, Shirasu balloon, ceramic balloon, glass balloon, plastic balloon, metal powders, and the like. The amount of the addition component is usually 20 to 60% by weight based on the two-component heat-curing composition.

In a certain embodiment of the present invention, a thermosetting resin and a latent curing agent thereof may be used together with the thermoplastic resin in the liquid A. Examples of the thermosetting resin include epoxy resins [glycidyl ether, glycidyl ester, glycidyl amine, linear aliphatic epoxide, alicyclic epoxide epoxy resins; and epoxy resin variants thereof, such as rubber-modified epoxy resins [reaction products of a bisphenol epoxy resin (a diglycidyl ether of bisphenol A, bisphenol F or bisphenol AD, a diglycidyl ether of alkylene oxide addition product of bisphenol A, and the like) with a butadiene-acrylonitrile-(meth)acrylic acid copolymer], urethane-modified epoxy resins [reaction products of a urethane prepolymer containing NCO at its terminals obtained by reacting a polytetramethylene ether glycol (molecular weight: 500 to 5000) with an excess amount of a diisocyante (tolylene diisocyanate, diphenylmethane diisocyanate, and the like) with an OH-containing epoxy resin (a diglycidyl ether of bisphenol A, a diglycidyl ether of polyhydric aliphatic aclohol, and the like)], and thiokol-modified epoxy resins.

In combination with the above-mentioned epoxy resins, latent curing agents thereof [for example, dicyandiamide, 4,4'-diaminodiphenylsulfone, imidazole derivatives (2-n-heptadecy imidazole, and the like), hydrazide derivatives (adipic acid dihydrazide, dodecanoic acid dihydrazide, sebacic acid dihydrazide, isophthalic acid dihydrazide, 1,3-bis(hydrazinocarboethyl)-5-isopropyl hydantoin, eicosanoic diacid dihydrazide, hydroquinone diglycolic acid dihydrazide, resorcinol diglycolic acid dihydrazide, 4,4'-ethylidene bisphenol diglycolic acid dihydrazide), N,N-dialkyl urea derivatives, N,N-dialkyl thiourea derivatives, melamine derivatives, diaminodiphenyl methane, diaminobiphenyl, phenylene diamine, tolylenediamine, dodecanediamine, decanediamine, octanediamine, tetoradecanediamine, hexadecanediamine, polyoxypropylenediamine, and the like] can be used.

Examples of the thermosetting resins used in the two-component curing composition of the present invention include polyurethane resins other than the above-mentioned epoxy resins. These can be used together with latent curing agents thereof. Examples of the combination of polyurethane resins and latent curing agents thereof include combinations of a polyurethane resin such as a blocked polyurethane prepolymer in which active isocyanate groups in a polyisocyanate compound or a polyurethane prepolymer containing isocyante groups at its terminals are blocked with a blocking agent, and a latent curing agent such as a polyamine compound in which active hydrogen groups (amino groups) in a polyol or polyamine are inactivated with a blocking agent.

These thermosetting resins and latent curing agents thereof may be contained in at least one of the liquid A and the liquid B in the two-component curing composition of the present invention. In usual, the thermosetting resin and the latent curing agent thereof are added in amounts of 1 to 20 parts and 0.01 to 10 parts, respectively, based on 100 parts of the thermoplastic resin in the liquid A. In this manner, the physical properties and the durability can be increased when the two-component curing composition is completely cured.

In the two-component curing composition of the present invention, foaming agents may be used as other addition components. Examples of the foaming agents include, but are not particularly limited to, thermally decomposable organic foaming agents including azo compounds such as azodicarbonamide and azobisisobutyronitrile; nitroso compounds such as dinitrosopentamethylenetetramine; hydrazide compounds such as p-toluenesulfonyl hydrazide and 4,4'-oxybenzenesulfonyl hydrazide; and the like. Further, microcapsule foaming agents which rapidly expand by heat may also be used. For example, foaming agents including an outer shell and a volatile liquid encapsulated in the outer shell may be exemplified in which the outer shell includes the trade name MICROPEARL F-80S (manufactured by Matsumoto Yushi-Seiyaku Co., Ltd.), the trade name MICROPEARL F-82 (manufactured by Matsumoto Yushi-Seiyaku Co., Ltd.), the trade name MICROPEARL F-80VS (manufactured by Matsumoto Yushi-Seiyaku Co., Ltd.), the trade name Expancel 091 (manufactured by Akzo Nobel), the trade name Expancel 091-80 (manufactured by Akzo Nobel), the trade name Expancel 091-140 (manufactured by Akzo Nobel), the tradename Expancel 092-120 (manufactured by Akzo Nobel), the trade name Expancel 093-120 (manufactured by Akzo Nobel), or an acrylonitrile-methacrylonitrile-vinyl acetate copolymer. The foaming agents having a foaming temperature of 160°C or more and 220°C or less can be preferably used.

The two-component curing composition of the present invention may contain an adhesion promoter as another addition component. Examples of the adhesion promoters include, but are not particularly limited to, polyamide compounds, isocyanate compounds, and the like. Examples of the polyamide adhesion promoter include polyamide amines obtained by condensation of a dimer acid and a polyamine, and the like. Examples of the isocyante adhesion promoter include blocked isocyanate polymers in which active isocyanate groups in a tolylene diisocyanate oligomer or a polyurethane prepolymer are blocked, and the like.

The two-component curing composition of the present invention may further contain, as other addition components, a moisture absorbent (calcium oxide, molecular sieves, and the like); a thixotropy-imparting agent (organic bentonite, fumed silica, aluminum stearate, castor oil derivatives, and the like); a stabilizer [2,6-di-t-butyl-4-methyl phenol, 2,2-methylene-bis(4-methyl-6-t-butyl phenol), nickel dibutyldithiocarbamate, metal soaps, and the like]; and the like. The amounts of these addition components are suitably selected according to the object, and usually they are contained in the two-component curing composition by blending them into the liquid A and/or the liquid B.

The mixture of the liquid A and the liquid B immediately after mixing is usually set to have a viscosity (20°C) of 50 to 200 Pa·s, which is a viscosity capable of coating, by controlling the kind and the blending of each component as occasion demand, whereby spray-coating can be automatically performed by robotization.

Further, when coating is performed in such a viscosity state, the gel shown in Fig. 1 can be formed in about 30 seconds to 60 minutes, and the gel has the sufficient showering resistance to washing with water, as described above.

The sealing process, the undercoating process and the bonding process of automobile body members, using the two-component curing composition of the present invention (usually, the mixture of the liquid A and the liquid B) will be described below.

In the present disclosure, each of the sealing process, the undercoating process and the bonding process can be performed in the first automobile body assembly step in the automobile manufacturing line (the automobile body assembly step → the coating step → the installation step) in accordance with the following procedures.

First, press-molded automobile body parts are assembled by spot-welding in the automobile body assembly step, and then the predetermined liquid A and liquid B are mixed and the obtained two-component curing composition is usually automatically coated on gaps between the welded parts (that is, gaps in an engine room, a floor, a dashboard, a bonnet trunk, door parts, and the like) in the sealing process, or wheel houses, lockers, and back sides of automobile bodies in the undercoating process, by preferably using robots in a predetermined thickness (in the case of the sealing process: 0.5 to 10 mm thick; in the case of the undercoating process: 0.2 to 5 mm thick, and in the case of the bonding process: 5 to 20 mm thick).

In the bonding process, the predetermined liquid A and liquid B are mixed and the obtained two-component curing composition is automatically coated on press-molded outer plate members by preferably using robots in the state of dots, each dot having a diameter of 10 to 30 mm, or beads, each bead having a diameter of 10 to 20 mm, and after that, reinforcement members are immediately assembled thereto.

After coating, the coated parts are allowed to stand for 30 seconds to 60 minutes for gelation, and the parts are subjected to the subsequent coating step (washing with water → pre-treatment → electrodeposition coating → electrodeposition furnace → middle, top coating → furnace for middle, top coating) and the installation step (installation, assembling → check and completion).

As the coating films which have gelled have excellent shape retention, the showering resistance is particularly excellent, and therefore the films are not scattered by, dissolved in, or dropped out from chemical treatment liquids or electrodeposition liquids. After that, the gelated films are completely cured by a heat treatment under baking conditions (generally 140 to 220°C × 10 to 60 minutes) in an electrodeposition furnace.

### Examples

The present invention will be more specifically described with reference to examples and comparative examples.

### Examples 1 and 2, and Comparative Example 1

### (1) Preparation of Two-Component Curing composition

Components of each of a liquid A and a liquid B shown in the following Table 1 were blended in parts shown in the Table, and the mixtures were mixed and stirred for 30 minutes in a mixer, and then the resultants were defoamed under reduced pressure for 30 minutes to give the liquid A and the liquid B, respectively.

### (2) Storage Stability (Results are also shown in Table 1.)

The prepared liquid A and liquid B were separately stored at 40°C for one week. Viscosities were measured by using a Brookfield rotational viscometer (at 20°C, a #7 rotor, at 20 rpm) before and after the storage, and rates of viscosity change (%) were calculated.

### (3) Performance Test (Results are also shown in Table 1.)

The liquid A and the liquid B were mixed in a static mixer at 23°C under an atmosphere, and the mixture was immediately subjected to each of the following performance tests.

### i) Gelling Property at Room Temperature

The mixture was allowed to stand at 23°C under an atmosphere, and the time (minute) to the gelation of the mixture was measured by touching it with a finger.

### ii) Shear Bond Test (MPa)

A shear bond test piece was made from an SPCC steal plate with 25 × 100 × 1 mm at a lap length of 25 mm and in a clearance of 1 mm. The test piece was baked at 170°C for 20 minutes, cooled to 20°C, and then the shear bond strength was measured.

### iii) Physical Properties of Cured product [Breaking Strength (MPa) and Elongation (%)]

A JIS 2 dumbbell with a thickness of 2 mm was made as a test piece. It was baked at 170°C for 20 minutes, cooled to 20°C, and then the breaking strength (MPa) and the elongation (%) were measured.

### iv) Showering Resistance

An SPCC steal plate was coated with the mixture in a thickness of 1 mm, and it was allowed to stand at 23°C for 30 minutes. The obtained test piece was set up vertically, and warm water having a temperature of 50°C and a pressure of 0.3 MPa was blown on the coated surface at a right angle (90°) from a nozzle (K9SPT1/4 × 5.0 manufactured by Katorigumi Seisakusho), which was set so that the distance between the nozzle and the film surface was 1 m. The change in appearance was evaluated.
(○: No deformation in the coating, ×: The coating was scattered.)

### v) Skin Irritation

A test was performed using female Hartley guinea pigs (Std/Hartley). A patch part was placed on dorsal and ventral parts of the animal, and each test substance was tightly applied to the part. That is, a lint cloth part of an adhesive plaster for a patch test (diameter: 16 mm, manufactured by Torii Pharmaceutical Co., Ltd.) was coated with 0.1 mL of the mixture sample, and it was applied to the dorsal and ventral parts of the animal for 4 hours using a low stimulus adhesive plaster (25 mm wide Skinergate (registered trade mark) manufactured by Nichiban Co., Ltd.) and a surgical tape (width: 50 mm, manufactured by Nichiban Co., Ltd.). However, only the lint cloth was applied to a non-treated part. After 48 hours from removal of the tight application, whether a dermal reaction was caused or not was confirmed. When a reaction was caused, it is shown as ×, and when no reaction was caused, it is shown as ○.

**[Table 1]**

| | | Comparative Example 1 (parts by weight) | Example 1 (parts by weight) | Example 2 (parts by weight) |
|---|---|---|---|---|
| liquid A | diisononyl phthalate | 100 | 100 | 100 |
| | acrylic resin¹⁾ | 100 | 100 | 100 |
| | dicyanediamide | 7 | 7 | 7 |
| | subtotal | 207 | 207 | 207 |
| liquid B | glycidyl methacrylate | 40 | - | - |
| | diethylene glycol dibenzoate | 64 | 64 | 64 |
| | diethyl malonate | - | 40 | - |
| | diethyl succinate | - | - | 40 |
| | bisphenol F epoxy resin²⁾ | 7 | 7 | 7 |
| | calcium oxide | 14 | 14 | 14 |
| | calcium carbonate ³⁾ | 189 | 189 | 189 |
| | surface-treated calcium carbonate | 36 | 36 | 36 |
| | subtotal | 350 | 189 | 189 |
| mixture | total | 557 | 557 | 557 |
| storage stability (%) | liquid A | +10 | +10 | +10 |
| | liquid B | -1 | -1 | -1 |
| gelling property at room temperature (minute at 23°C) | | 15 | 15 | 20 |
| physical property of cured product | 1.5 | 1.2 | 1.5 | 1.3 |
| | breaking strength (MPa) | 0.5 | 1.2 | 1.0 |
| | elongation(%) | 350 | 300 | 310 |
| showering resistance (after 30 minutes) | | ○:No deformation | ○:No deformation | ○:No deformation |
| skin irritation | | × | ○ | ○ |

| | | | | |
|---|---|---|---|---|
| Note 1) gradient acrylic resin "LP-3106" manufactured by Mitsubishi Rayon Co., Ltd. Note 2) bisphenol F epoxy resin "Epicoat 807" manufactured by Japan Epoxy Resins Co., Ltd. Note 3) Whiton 300 M manufactured by Bihoku Funka Kogyo Co., Ltd. Note 4) Hakuenka (registered trade mark) CCR manufactured by Shiraishi Kogyo Kaisha, Ltd. | | | | |

From the results of Table 1, it was confirmed that all of the compositions according to the present invention had excellent gelling properties at room temperature, that is, the compositions gelated between 15 minutes and 20 minutes. The property was the same level as in acrylic acid esters obtained using no dibasic acid ester. As to other performances, it was found that better performance balance could be obtained than that obtained using an acrylic acid ester, not a dibasic acid ester.

When the dibasic acid ester is not used, and the acrylic acid ester is used, the obtained composition showed poor in the skin irritation, but the compositions according to the present invention had excellent skin irritation.

## Claims

1. A two-component curing composition for an automotive material used in an automobile manufacturing line, wherein said two-component curing composition is composed of:
a liquid A comprising a thermoplastic resin and a plasticizer, wherein the
thermoplastic resin is selected from the group consisting of acrylic resins;
MBS resins; polyvinyl chloride; vinyl chloride copolymers; ionomer resins;
AAS resins; AES resins; AS resins; ABS resins; thermoplastic polyurethane resins, and polyester resins; and
a liquid B comprising a gelling agent containing a dibasic acid ester, wherein the liquid A and the liquid B form a gel when they are mixed at room temperature and wherein the dibasic acid ester is a malonic acid diester, a succinic acid diester or a glutaric acid diester.

2. The two-component curing composition of Claim 1, wherein the dibasic acid ester is succinic acid diester or glutaric acid diester.

3. The two-component curing composition of any one of Claims 1 to 2, wherein the liquid B further comprises a component dissolving or swelling the thermoplastic resin in the liquid A.

4. The two-component curing composition of any one of Claims 1 to 3, which further comprises a thermosetting resin and a latent curing agent thereof.

5. The two-component curing composition of Claim 4, wherein the thermosetting resin is an epoxy resin and/or a urethane resin.

6. The two-component curing composition of any one of Claims 1 to 5, wherein the gelling agent is contained in an amount of 50 to 150 parts by weight based on 100 parts by weight of the thermoplastic resin.

7. The two-component curing composition of any one of Claims 1 to 6, wherein the dibasic acid ester is contained in an amount of 10 to 150 parts by weight based on 100 parts by weight of the thermoplastic resin.

8. The two-component curing composition of any one of Claims 1 to 7, wherein galation time is from 30 seconds to 60 minutes after mixing the liquid A and the liquid B at room temperature.

9. The two-component curing composition of any one of Claims 1 to 8, wherein a mixture of the liquid A and the liquid B has a viscosity capable of spray-coating upon mixing, and the mixture gels from 30 seconds to 60 minutes after coating.

10. The two-component curing composition of any one of Claims 1 to 9, wherein the mixture of the liquid A and the liquid B has a viscosity (20°C) of 50 to 200 Pa·s upon mixing.

## Patentansprüche

1. Zweikomponenten-Härtungszusammensetzung für ein Automobilmaterial, das in einer Automobilherstellungsstraße verwendet wird, wobei die Zweikomponenten-Härtungszusammensetzung aus den Folgenden besteht:
eine Flüssigkeit A, die ein thermoplastisches Harz und einen Weichmacher umfasst, wobei das thermoplastische Harz ausgewählt ist aus der Gruppe, bestehend aus Acrylharzen, MBS-Harzen, Polyvinylchlorid, Vinylchloridcopolymeren, Ionomerharzen, AAS-Harzen, AES-Harzen, AS-Harzen, ABS-Harzen, thermoplastischen Polyurethanharzen und Polyesterharzen, und
eine Flüssigkeit B, die ein Gelierungsmittel, das einen Ester einer zweibasigen Säure enthält, umfasst, wobei die Flüssigkeit A und die Flüssigkeit B ein Gel bilden, wenn sie bei Raumtemperatur gemischt werden, und wobei der Ester einer zweibasigen Säure ein Malonsäurediester, ein Bernsteinsäurediester oder ein Glutarsäurediester ist.

2. Zweikomponenten-Härtungszusammensetzung gemäß Anspruch 1, wobei der Ester einer zweibasigen Säure Bernsteinsäurediester oder Glutarsäurediester ist.

3. Zweikomponenten-Härtungszusammensetzung gemäß einem der Ansprüche 1 bis 2, wobei die Flüssigkeit B weiterhin eine Komponente, die das thermoplastische Harz in der Flüssigkeit A auflöst oder aufquellt, umfasst.

4. Zweikomponenten-Härtungszusammensetzung gemäß einem der Ansprüche 1 bis 3, die weiterhin ein wärmehärtbares Harz und ein latentes Härtungsmittel davon umfasst.

5. Zweikomponenten-Härtungszusammensetzung gemäß Anspruch 4, wobei das wärmehärtbare Harz ein Epoxidharz und/oder ein Urethanharz ist.

6. Zweikomponenten-Härtungszusammensetzung gemäß einem der Ansprüche 1 bis 5, wobei das Gelierungsmittel in einer Menge von 50 bis 150 Gewichtsteilen, basierend auf 100 Gewichtsteilen des thermoplastischen Harzes, enthalten ist.

7. Zweikomponenten-Härtungszusammensetzung gemäß einem der Ansprüche 1 bis 6, wobei der Ester einer zweibasigen Säure in einer Menge von 10 bis 150 Gewichtsteilen, basierend auf 100 Gewichtsteilen des thermoplastischen Harzes, enthalten ist.

8. Zweikomponenten-Härtungszusammensetzung gemäß einem der Ansprüche 1 bis 7, wobei die Gelierungszeit von 30 Sekunden bis 60 Minuten nach dem Mischen der Flüssigkeit A und der Flüssigkeit B bei Raumtemperatur beträgt.

9. Zweikomponenten-Härtungszusammensetzung gemäß einem der Ansprüche 1 bis 8, wobei eine Mischung der Flüssigkeit A und der Flüssigkeit B eine Viskosität besitzt, die Sprühbeschichten beim Mischen ermöglicht, und die Mischung 30 Sekunden bis 60 Minuten nach dem Beschichten geliert.

10. Zweikomponenten-Härtungszusammensetzung gemäß einem der Ansprüche 1 bis 9, wobei die Mischung der Flüssigkeit A und der Flüssigkeit B eine Viskosität (20°C) von 50 bis 200 Pa·s beim Mischen besitzt.

## Revendications

1. Composition de durcissement à deux composants pour un matériau automobile utilisé dans une chaîne de fabrication d'automobiles, dans laquelle ladite composition de durcissement à deux composants est composée
d'un liquide A comprenant une résine thermoplastique et un plastifiant, dans laquelle la résine thermoplastique est choisie dans le groupe constitué de résines acryliques ; de résines MBS ; de polychlorure de vinyle ; de copolymères de chlorure de vinyle ; de résines ionomères, de résines AAS ; de résines AES ; de résines AS ; de résines ABS ; de résines de polyuréthane thermoplastiques et de résines de polyester ; et
d'un liquide B comprenant un agent gélifiant contenant un ester d'acide dibasique, dans laquelle le liquide A et le liquide B forment un gel lorsqu'ils sont mélangés à température ambiante et dans laquelle l'ester d'acide dibasique est un diester d'acide malonique, un diester d'acide succinique ou un diester d'acide glutarique.

2. Composition de durcissement à deux composants selon la revendication 1, dans laquelle l'ester d'acide dibasique est un diester d'acide succinique ou un diester d'acide glutarique.

3. Composition de durcissement à deux composants selon l'une quelconque des revendications 1 à 2, dans laquelle le liquide B comprend en outre un composant dissolvant ou faisant gonfler la résine thermoplastique dans le liquide A.

4. Composition de durcissement à deux composants selon l'une quelconque des revendications 1 à 3, qui comprend en outre une résine thermodurcissable et un agent de durcissement latent de celle-ci.

5. Composition de durcissement à deux composants selon la revendication 4, dans laquelle la résine thermodurcissable est une résine époxy et/ou une résine uréthane.

6. Composition de durcissement à deux composants selon l'une quelconque des revendications 1 à 5, dans laquelle l'agent gélifiant est contenu en une quantité de 50 à 150 parties en poids pour 100 parties en poids de la résine thermoplastique.

7. Composition de durcissement à deux composants selon l'une quelconque des revendications 1 à 6, dans laquelle l'ester d'acide dibasique est contenu en une quantité de 10 à 150 parties en poids sur la base de 100 parties en poids de la résine thermoplastique.

8. Composition de durcissement à deux composants selon l'une quelconque des revendications 1 à 7, dans laquelle le temps de gélification est de 30 secondes à 60 minutes après le mélange du liquide A et du liquide B à température ambiante.

9. Composition de durcissement à deux composants selon l'une quelconque des revendications 1 à 8, dans laquelle un mélange du liquide A et du liquide B a une viscosité susceptible d'être appliquée en revêtement par pulvérisation lors du mélange, et le mélange gélifie de 30 secondes à 60 minutes après l'application en revêtement.

10. Composition de durcissement à deux composants selon l'une quelconque des revendications 1 à 9, dans laquelle un mélange du liquide A et du liquide B a une viscosité (20°C) de 50 à 200 Pa.s lors du mélange.
